# EUROPEAN PATENT SPECIFICATION

(11) **EP 3 559 424 B1**
(45) Date of publication and mention of the grant of the patent: **16.09.2020**
(21) Application number: 17816893.6
(22) Date of filing: 20.12.2017
(51) Int. Cl.: F01P 5/06

(54) **COOLING SYSTEM OF THE ENGINE OF A MOTORCYCLE**
KÜHLSYSTEM DES MOTORS EINES MOTORRADS
SYSTÈME DE REFROIDISSEMENT DE MOTEUR DE MOTOCYCLETTE

(30) Priority: 22.12.2016 IT 201600130142
(43) Date of publication of application: 30.10.2019
(73) Proprietor: PIAGGIO & C. S.p.A., 56025 Pontedera (Pisa) (IT)
(72) Inventor: DOVERI, Stefano, 56025 Pontedera (PI) (IT)
(74) Representative: Mannucci, Michele
(86) International application number: PCT/EP2017/083834
(87) International publication number: WO 2018/115132

(56) References cited:
- EP-A1- 2 159 093
- JP-A- 2008 175 086
- US-A1- 2005 081 803

## Description

The present invention relates to a cooling system of an internal combustion engine of a motorcycle, in particular a scooter, wherein a cooling fan is provided, in particular a fan directly keyed on an extension of the crankshaft, which draws air through a guard, arranged on a side of the motorcycle, and which receives a substantially tangential air flow deriving from the forward motion of the motorcycle.

Although its use is not limited to this example, this cooling system is suitable in particular to the water-cooled motorcycles wherein the air is drawn through a radiator arranged behind the above-mentioned guard which protects and hides it.

The drawing direction is substantially perpendicular to the plane thereupon the radiator develops, and on the contrary it is substantially parallel to the rotation axis of the fan, which typically is of centrifugal type.

The fan is included inside a box-like container called air distribution case or fan case, comprising a front wall, faced towards said guard and usually rested upon the radiator, which has a wide opening therethrough the air is drawn.

The case further comprises distribution walls, projecting from said front wall and substantially parallel to the drawing direction, which have the purpose of encasing and directing the turbulent air outgoing from the radiator, in the compartment which receives the fan itself.

Fan cases are known, wherein the distribution walls form a gap therefrom the air outgoes laterally, pushed by the centrifugal effect of the fan.

However, such gap is a possible entrance for debris and dirt, which could interfere with the rotation of the fan, although the path inletting the compartment of the fan through this gap is counter current.

For this reason, the gap at issue has obstacles to prevent solid debris from crossing it.

For example, European patent application N. EP 2,014,891 A1 describes a fan case with a gap directed downwards which has a plurality of fins positioned along an arc of circle outside the periphery of the fan and arranged radially, to interfere as less as possible with the passage section and to channel the air in radial direction.

Moreover, EP 2,022,658 describes a fan case with a triple gap: downwards, towards the front direction and towards the rear direction, wherein each gap includes fins parallel therebetween and positioned downwards, towards the front direction and towards the rear direction.

A cooling system according to the preamble of claim 1 is disclosed in US2005/0081803.

The above-mentioned fans usually are directly dragged by the engine and then they can have a rotation regime which is not necessary connected to the momentary cooling needs and which in some case can be oversized.

The presence of the above-mentioned fins, although required, at determined rotation regimes determines a noise, caused by the turbulence and by the intensity of the outletting air flow, which can be felt as annoyance by the user.

The technical problem underlying the present invention is to provide a cooling system for an internal combustion engine of a motorcycle which allows to obviate the drawbacks mentioned with reference to the known art.

Such problem is solved by a cooling system as specified above, wherein the distribution walls determine a side gap, the case having at such gap a plurality of pegs with circular sections, arranged along a line surrounding said central opening.

The main advantage of the cooling system according to the present invention lies in the fact of allowing to reduce the noise independently from the rotation regime of the fan and from the entity of the drawn air flow rate.

The present invention will be described hereinafter according to a preferred embodiment example thereof, provided by way of example and not for limitative purposes with reference to the enclosed drawings wherein:
* figure 1 shows a side view of a motorcycle, in particular a scooter, incorporating a drive unit with a cooling system according to the invention;
* figure 2 shows a partial view from back of the scooter of figure 1, illustrating some outer portions of the cooling system according to the invention;

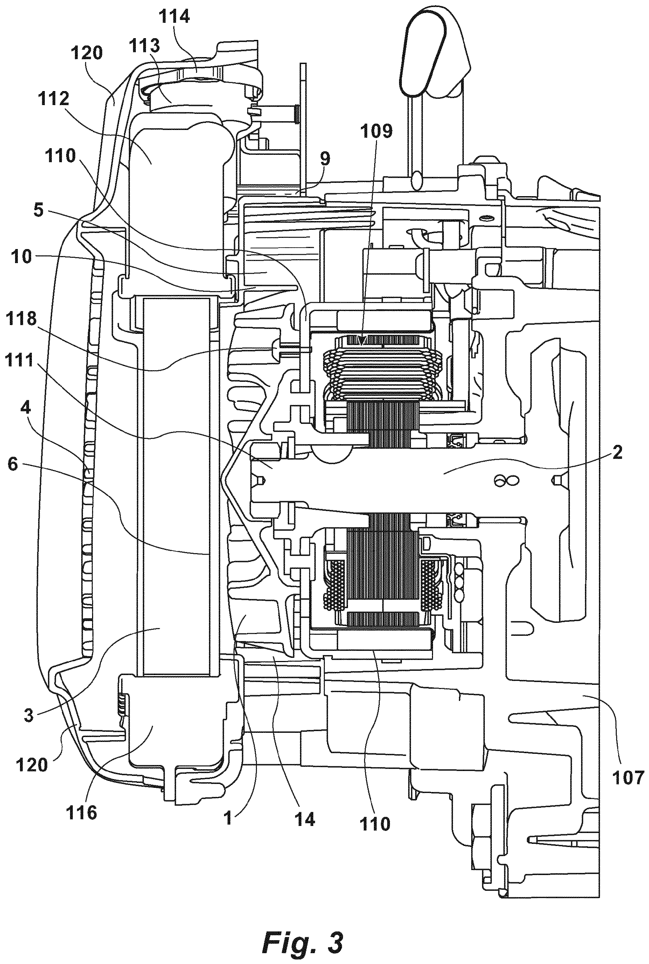

* figure 3 shows a view in partial section of a drive unit of the scooter of figure 1, incorporating the cooling system according to the invention;
* figure 4 shows a perspective view in partial cross section of an embodiment of cooling system according to the invention; and
* figure 5 shows a perspective view of an element of the cooling system of figure 4.

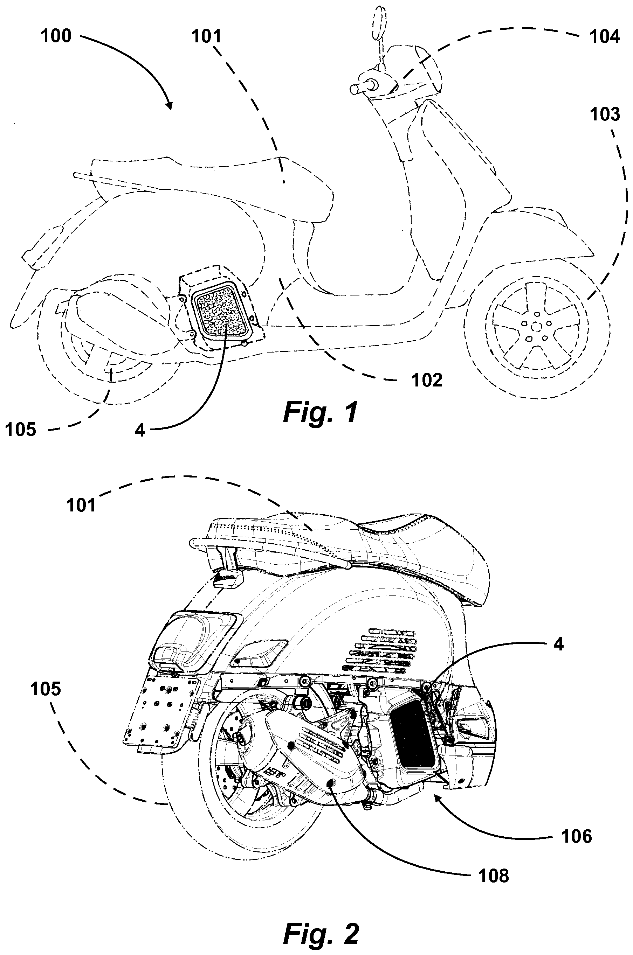

With reference to figures 1 and 2, a motorcycle, and in particular a scooter, is designated as a whole with 100. The invention relates the field of saddle vehicles generally with two, three or four wheels, with particular reference to the scooters having a drive unit arranged below a saddle 101, inside a chassis 102 which herein is represented laterally, extending from a front wheel 103, driven by a handlebar 104 to a driving rear wheel 105.

The drive unit 106 is of the type having one or more cylinders, one in the present example, arranged in a tilted position approximatively on the median plane of the vehicle which corresponds to the rotation plane of the two wheels during the forward rectilinear running.

The engine of the drive unit has an engine block 107 in one single piece which receives, in the present embodiment example, a cylinder and a related piston.

The piston acting in said cylinder is connected to an engine block positioned transversally and perpendicularly to said median plane. On one not represented side of the scooter 100 devices for transmitting the motion from the crankshaft to the hub of the rear wheel 105 are provided.

On the represented side, the scooter 100 has a cooling system of the drive unit which in turn comprises the internal combustion engine which could be of the air-or water-cooled type, in the present embodiment example of water type, wherein a cooling fan 1 is controlled by the crankshaft 2 and it is faced towards a radiator 3 which is protected by a guard 4 arranged on one side of the motorcycle, which receives a substantially tangential air flow deriving from the forward motion of the motorcycle 100.

In the present example of cooling system, the cooling fan 1 is keyed to an end 111 of the crankshaft 2. The direct directly keying of the fan is a particular case of fan which is controlled in rotation by the crankshaft, in a not autonomous way from the rotation regime of the engine itself.

In particular, in the present embodiment example, both the fan 1, providing for drawing air through the radiator 3, and an electric motor-generator 109, which provides for charging an electric battery, switching-on the internal combustion engine and, in case, supplying driving force when the motorcycle is of the type of so-called drive type, are assembled on said crankshaft 2.

The electric motor 109 is of the type having an inner stator and a bell-like outer rotor, provided with a bell-like casing 110, rotor and bell-like casing 110 being keyed to the crankshaft 2.

The fan 1, in order to be dragged by the crankshaft 2, is fastened to the outer front surface of the bell-like casing 110, by means of screws 118.

Electric motor 109, fan 1, radiator 3 and related guard 4 are then received on the same side of the engine at one end 111 of the crankshaft; the opposite end of the crankshaft is then connected to the previously mentioned transmission elements.

The radiator 3 has a box-like structure comprised between two planes parallel therebetween and to the median plane of the vehicle, and even the fan 1 lies and rotates on a plane substantially parallel thereto, so that the air flow thereby drawn has to be deviated by about 90° with respect to the tangential flow hitting the vehicle due to the effect of the forward motion thereof.

The radiator extends between an upper tank 112 which has a filling nozzle 113 closed by a cap 114, and a lower manifold 116. The upper tank 112 has a first connecting duct 115, faced towards the head of the engine, which is connected with pipes of the water cooling system, and even the lower manifold 116 has a second connecting duct 117 faced in the same way and provided for the same object.

The guard 4 is formed in a guard structure 120 having raised edges adjacent to the guard itself, and extensions which provide for covering wholly the radiator 3, the tank 112 with the nozzle 113, the lower manifold 116, by protecting them against each outer agent.

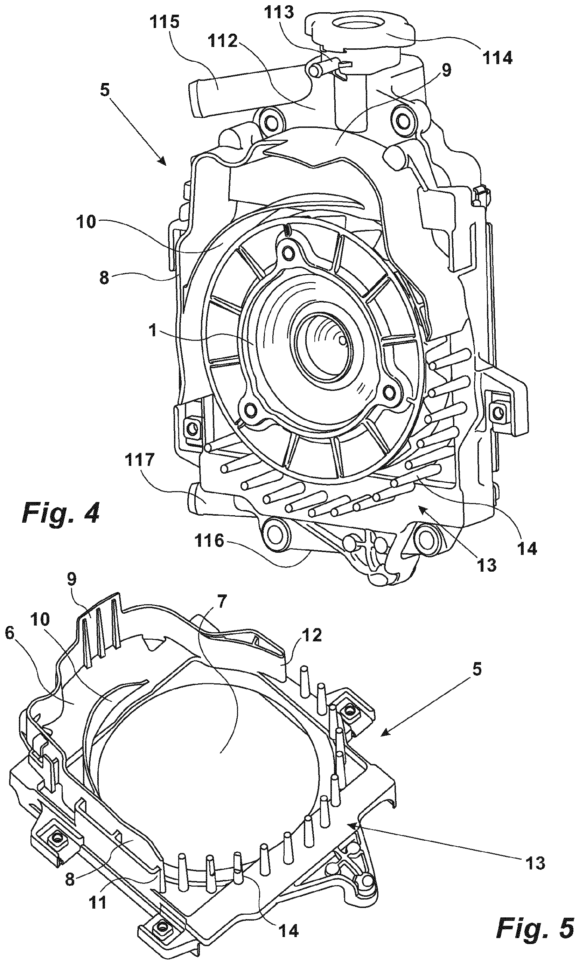

The fan 1 is closed in a fan case 5 which is arranged between radiator 3 and electric motor 109: it has a front wall 6 comprising a wide central opening 7 corresponding to the face of the radiator 3 opposite to the one directed towards the guard 4. It further has distribution walls projecting from said front wall by creating a drawing channel including the fan 1 (figure 4).

The distance between laminar casing 110 and front wall 6 defines the compartment which receives the fan 1 and which is laterally limited by the distribution walls.

In particular, the fan case 5 has a front distribution wall 8, that is faced towards the running direction of the vehicle, and a curved upper distribution wall 9, encompassing the upper portion of the fan. From the front wall 6 even a septum 10 projects surrounding the periphery of the fan 1 in the front-upper quadrant, for an arch of 90°-120°, the septum 10 branches from the middle of the front distribution wall 8. The front 8 and upper 9 distribution walls are joined therebetwen and they have two staggered terminal ends: the first end 11 of the front wall 8 is lowered with respect to the second end 12 of the upper wall 9.

In the area of the lower and rear fan case 5, that is in the areas wherein the distribution walls 8, 9 are not present, the fan case 5 determines a gap 13 between it and the face of the engine block 107 directed towards the guard 4, extending below the case 5 and on the rear side, between the two ends 11 and 12 of the distribution walls 8, 9.

At the gap 113, near the edge of the central opening 7 of the front wall 6, the fan case 5 has a plurality of pegs 14 projecting perpendicularly from the front wall 6 and which are arranged equidistant therebetween along a curved line surrounding the edge of said central opening.

The pegs 14 have a circular section and are slightly tapered between the base thereof and the distal end thereof; their height is so that the distal end touches lightly the engine block 107, extending on the whole transversal width of the gap 13.

The circular section of the pegs make them neutral with respect to the direction of the air flow which is discharged through the gap 13: this shape, differently from that of the fins, produces a decrease in the produced noise even at high regimes.

It is to be noted that what sofar described can relate both a scooter with a steering front wheel and with a fixed rear wheel and a scooter of the three-wheel type, with a pair of swinging front wheels and a fixed rear wheel. However, in the motorcycle even a double rear wheel could be provided in a solution which is not herein described, but which can include the herein described cooling system.

In the herein described configuration, both the fan, providing for drawing air through a radiator, and an electric generating engine, providing for charging an electric battery, switching-on the internal combustion engine and, in case, supplying driving force when the motorcycle is of the so-called hybrid drive type, are assembled on the crankshaft. The axis of the internal combustion engine is transversal with respect to the longitudinal development of the motorcycle and then is horizontal with respect to a running plane, as well as perpendicular to a vertical plane which is substantially defined by the rotation plane of the fixed, that is not steering, rear wheel when the motorcycle proceeds according to a straight line. Electric motor, fan, radiator and related guard are then received on the same side of the engine, for example the right side opposite to the side of the vehicle transmission, at one end of the crankshaft which is controlled in rotation by one or more pistons; the opposite end of the crankshaft is then connected to the motion transmission elements to the driving rear wheel. In the motorcycle, a double front and/or rear wheel could be provided in a solution which herein is not described, but which can include the herein described cooling system.

The positioning of the guard of the above-described radiator makes that it is not hit frontally with air, but tangentially. The air required to cool the radiator of the cooling water is then drawn by a fan the axis thereof is substantially perpendicular to the air flow deriving from the forward motion of the motorcycle.

To the above-described cooling system a person skilled in the art, with the purpose of satisfying additional and contingent needs, could introduce several modifications and variants, all however comprised within the protective scope of the present invention, as defined by the enclosed claims.

## Claims

1. A system for cooling the internal combustion engine of a motorcycle (100), comprising a fan (1) included inside a fan case (5) having a front wall (6) with a central opening (7) therethrough the air is drawn, and distribution walls (8, 9), projecting from said front wall (6) and substantially parallel to the drawing direction, including and directing the turbulent air in a compartment which receives the fan (1), wherein said distribution walls (8, 9) determine a side gap (13), **characterized in that** at such gap the case (13) has a plurality of pegs (14) with circular sections, arranged along a line surrounding said central opening(7).

2. The cooling system according to claim 1, wherein the fan (1) is controlled in rotation by the crankshaft of the motorcycle (100), in a not autonomous way from the rotation regime of the engine itself.

3. The cooling system according to claim 2, wherein the fan (1) draws an air flow through a radiator and a related protection guard (4), according to a direction parallel to the rotation axis of the fan (1); fan (1), radiator (3) and related guard (4) being received on the same side of the engine at one end (111) of the crankshaft (2).

4. The cooling system according to claim 1, wherein the fan case (5) has a front distribution wall (8), faced towards the running direction of the vehicle, and an upper distribution wall (9), encompassing the upper portion of the fan (1), said gap (13) extending below the fan case (5) and on the rear side, between the two ends (11, 12) of the distribution walls (8, 9) .

5. The cooling system according to claim 1, wherein the pegs (14) are arranged along a curved line.

6. The cooling system according to claim 5, wherein the pegs (14) are equidistant therebetween.

7. The cooling system according to claim 1, wherein the pegs (14) are slightly tapered between the base thereof and the distal end.

8. A motorcycle (100) incorporating a cooling system according to one of the preceding claims.

9. The motorcycle (100) according to claim 8, wherein both the fan (1), providing for drawing air through a radiator (3), and an electric generating engine (109) are assembled on the crankshaft (2), the axis of the engine being transversal with respect to the longitudinal development of the motorcycle and horizontal with respect to a running plane.

10. The motorcycle (100) according to claim 9, wherein the front wall (6) of the fan case (5) is rested upon the radiator (3), the fan (1) being included in a compartment defined by said front wall (6) and by a bell-like casing 110 of the rotor of the electric motor, the distal end of the pegs (14) touching lightly said face of the engine block (107) directed towards the radiator (3).

## Patentansprüche

1. System zum Kühlen des Verbrennungsmotors eines Motorrades (100) mit einem Gebläse (1), das innerhalb eines Gebläsegehäuses (5) angeordnet ist, mit einer vorderen Wand (6) mit einer Mittenöffnung (7), durch die Luft gezogen wird, und Verteilungswänden (8, 9), die von der vorderen Wand (6) vorstehen und im Wesentlichen parallel zu der Zugrichtung sind, die die turbulente Luft umschließen und in eine Kammer richten, die das Gebläse (1) aufnimmt, wobei die Verteilungswände (8, 9) einen Seitenspalt (13) begrenzen, **dadurch gekennzeichnet, dass** bei einem solchen Spalt das Gehäuse (13) eine Anzahl von Zapfen (14) mit kreisförmigen Querschnitten aufweist, die entlang einer Linie angeordnet sind, die die Mittenöffnung (7) umgibt.

2. Kühlsystem nach Anspruch 1, wobei das Gebläse (1) hinsichtlich der Drehung durch die Kurbelwelle des Motorrades (100) in einer nicht autonomen Weise von dem Drehzahlbereich des Motors selbst gesteuert wird.

3. Kühlsystem nach Anspruch 2, wobei das Gebläse (1) eine Luftströmung durch einen Radiator und ein zugeordnetes Schutzgitter (4) entsprechend einer Richtung parallel zu der Drehachse des Gebläses (1) zieht, wobei das Gebläse (1), der Radiator (3) und das zugeordnete Gitter (4) auf derselben Seite des Motors an einem Ende (111) der Kurbelwelle (2) aufgenommen sind.

4. Kühlsystem nach Anspruch 1, wobei das Gebläsegehäuse (5) eine vordere Verteilungswand (8) aufweist, die zu der Fahrtrichtung des Fahrzeugs gerichtet ist, und eine obere Verteilungswand (9), die den oberen Teil des Gebläses (1) umschließt, wobei der Spalt (13) sich unterhalb des Gebläsegehäuses (5) und an der Rückseite zwischen den beiden Enden (11, 12) der Verteilungswände (8, 9) erstreckt.

5. Kühlsystem nach Anspruch 1, wobei die Zapfen (14) entlang einer gekrümmten Linie angeordnet sind.

6. Kühlsystem nach Anspruch 5, wobei die Zapfen (14) dazwischen äquidistant sind.

7. Kühlsystem nach Anspruch 1, wobei die Zapfen (14) zwischen ihrer Basis und dem distalen Ende leicht abgeschrägt sind.

8. Motorrad (100) mit einem Kühlsystem nach einem der vorstehenden Ansprüche.

9. Motorrad (100) nach Anspruch 8, wobei sowohl das Gebläse (1), das zum Ziehen von Luft durch einen Radiator (3) vorgesehen ist, als auch ein Elektrogenerator (109) an der Kurbelwelle (2) montiert sind, wobei die Achse des Motors quer mit Bezug auf die Längsausdehnung des Motorrades und horizontal mit Bezug auf eine Laufebene ist.

10. Motorrad (100) nach Anspruch 9, wobei die vordere Wand (6) des Gebläsegehäuses (5) auf dem Radiator (3) ruht, wobei das Gebläse (1) in einer Kammer eingeschlossen ist, die durch die vordere Wand (6) und durch ein glockenförmiges Gehäuse (110) des Rotors des Elektromotors definiert ist, wobei das distale Ende der Zapfen (14) leicht die Fläche des Motorblocks (107) berührt, die zu dem Radiator (3) gerichtet ist.

## Revendications

1. Un système de refroidissement pour moteur à combustion interne d'une motocyclette (100), comprenant un ventilateur (1) inclus dans un boîtier de ventilateur (5) ayant une paroi frontale (6) avec une ouverture centrale (7) à travers laquelle l'air est aspiré, et des parois de distribution (8, 9) faisant saillie à partir de ladite paroi frontale (6) et sensiblement parallèles à la direction d'aspiration, incluant et dirigeant l'air turbulent dans un compartiment qui reçoit le ventilateur (1), dans lequel lesdites parois de distribution (8, 9) forment un espace latéral (13), **caractérisé en ce que** au niveau d'un tel espace, le boîtier (13) comporte une pluralité de chevilles (14) ayant des sections circulaires, agencées le long d'une ligne entourant ladite ouverture centrale (7).

2. Le système de refroidissement selon la revendication 1, dans lequel le ventilateur (1) est entraîné en rotation par le vilebrequin de la motocyclette (100), d'une manière non autonome à partir du régime de rotation du moteur lui-même.

3. Le système de refroidissement selon la revendication 2, dans lequel le ventilateur (1) aspire un flux d'air à travers un radiateur et une grille de protection associée (4), suivant une direction parallèle à l'axe de rotation du ventilateur (1) ; le ventilateur (1), le radiateur (3) et la grille associée (4) étant logés du même côté du moteur à une extrémité (111) du vilebrequin (2).

4. Le système de refroidissement selon la revendication 1, dans lequel le boîtier de ventilateur (5) comporte une paroi de distribution frontale (8), tournée du côté de la direction d'avancement du véhicule, et une paroi de distribution inférieure (9), englobant la partie supérieure du ventilateur (1), ledit espace (13) s'étendant sous le boîtier de ventilateur (5) et du côté arrière, entre les deux extrémités (11, 12) des parois de distribution (8, 9).

5. Le système de refroidissement selon la revendication 1, dans lequel les chevilles (14) sont agencées le long d'une ligne incurvée.

6. Le système de refroidissement selon la revendication 5, dans lequel les chevilles (14) sont équidistantes les unes des autres.

7. Le système de refroidissement selon la revendication 1, dans lequel les chevilles (14) sont légèrement effilées entre leur base et leur extrémité distale.

8. Une motocyclette (100) incorporant un système de refroidissement selon l'une des revendications précédentes.

9. La motocyclette (100) selon la revendication 8, dans laquelle à la fois le ventilateur (1), prévu pour aspirer de l'air à travers un radiateur (3), et un moteur générant de l'électricité (109) sont assemblés sur le vilebrequin (2), l'axe du moteur étant perpendiculaire à l'extension longitudinale de la motocyclette et horizontal par rapport au plan d'avancement.

10. La motocyclette (100) selon la revendication 9, dans laquelle la paroi frontale (6) du boîtier de ventilateur (5) repose sur le radiateur (3), le ventilateur (1) étant inclus dans un compartiment formé par ladite paroi frontale (6) et par un boîtier en forme de cloche (110) du rotor du moteur électrique, l'extrémité distale des chevilles (14) touchant légèrement ladite face du bloc moteur (107) tournée vers le radiateur (3).
